# EUROPÄISCHE PATENTSCHRIFT

(11) **EP 0 464 420 B1**
(45) Veröffentlichungstag und Bekanntmachung des Hinweises auf die Patenterteilung: **07.09.1994**
(21) Anmeldenummer: 91109703.8
(22) Anmeldetag: 13.06.1991
(51) Int. Cl.: B60K 15/077, B60K 15/035, B60K 15/04

(54) **Tankfüllstutzen für einen Treibstofftank**
Filler neck for a fuel tank
Tubulure de remplissage d'un réservoir de carburant

(30) Priorität: 04.07.1990 DE 4021218
(43) Veröffentlichungstag der Anmeldung: 08.01.1992
(73) Patentinhaber: B L A U GmbH, D-40764 Langenfeld (DE)
(72) Erfinder: Scharrer, Konrad, W-4010 Hilden (DE)
(74) Vertreter: Schaumburg, Thoenes & Thurn

(56) Entgegenhaltungen:
- EP-A- 0 223 051
- EP-A- 0 333 549
- DE-A- 3 721 049
- DE-C- 3 531 159
- GB-A- 1 557 504
- US-A- 4 809 863

## Beschreibung

Die Erfindung betrifft einen Tankfüllstutzen der im Oberbegriff des Anspruches 1 genannten Art.

Im modernen Automobilbau geht man mehr und mehr dazu über, an das Ende des Tankfüllrohrs einen Tankfüllstutzen anzusetzen, welcher mehrere unterschiedliche Funktionen vereinigt. So enthalten derartige Tankfüllstutzen im allgemeinen einen selbstschließenden Verschluß, welcher beispielsweise durch eine in Richtung auf einen Dichtsitz vorgespannte, in das Innere des Tankfüllstutzens verschwenkbare Verschlußklappe gebildet ist, die durch die Zapfpistole in ihre Offenstellung verschwenkt wird.

Durch die DE-A-37 21 049 ist bereits ein Tankfüllstutzen der im Oberbegriff des Anspruches 1 genannten Art bekannt. Dieser ist mit einem in Füllrichtung hinter dem Dichtsitz vom Aufsatzstutzen abzweigenden Kanal versehen, in welchem ein durch die verstellbare Verschlußklappe betätigbares Überfüllventil angeordnet ist. Dieses ist bei geschlossener Verschlußklappe offen, so daß infolge einer Erwärmung sich ausdehnender Kraftstoff über diesen Kanal in einen Ausgleichsbehälter überlaufen kann; das Überfüllventil ist mit der Verschlußklappe gekoppelt, so daß es beim Öffnen der Verschlußklappe geschlossen und ein Überströmen von Kraftstoff in den Ausgleichsbehälter vermieden wird. Diese Lösung ist verhältnismäßig aufwendig, da außer dem Haupttank ein gesonderter Ausgleichsbehälter vorgesehen werden muß, der überdies auf nicht näher beschriebene Weise mit dem Haupttank verbindbar sein muß, damit der übergelaufene Kraftstoff letztlich wieder in den Haupttank zurücklaufen kann.

Außerdem ist der bekannte Tankfüllstutzen mit einem Überdruckventil versehen, welches bei einem Überdruck im Tank selbsttätig öffnet, so daß ein Druckausgleich stattfinden kann. Dieses Überdruckventil ist an der Verschlußklappe angeordnet, wodurch diese baulich kompliziert, schwer und voluminös wird, so daß sich Schwierigkeiten bei der Unterbringung der Verschlußklappe innerhalb des Tankfüllstutzens ergeben können, zumal auch die Lagerung sowie die Rückstellfeder für die Verschlußklappe dem Baugewicht und der Baugröße angepaßt werden müssen. Außerdem besteht die Gefahr, daß das auf der Oberseite der Verschlußklappe mündende Überdruckventil beim Einführen der Zapfpistole durch diese beschädigt wird, was im allgemeinen einen Austausch des gesamten Tankfüllstutzens erforderlich macht.

Ein weiterer Nachteil der bekannten Konstruktion wird in folgendem gesehen: das von der Verschlußklappe betätigte Überfüllventil ist konstruktionsbedingt unmittelbar unterhalb des Dichtsitzes der Verschlußklappe angeordnet, so daß auch der Überlaufpegel unmittelbar unterhalb der Verschlußklappe liegt, was den geltenden Sicherheitsbestimmungen nicht mehr entspricht; es wird vielmehr verlangt, daß der höchstmögliche Füllpegel bei einer normalen Lage des Fahrzeuges um einen bestimmten Betrag unterhalb des Dichtsitzes liegt.

Um ein einwandfreies Nachlaufen des Kraftstoffes aus dem Tank während des normalen Motorbetriebes zu gewährleisten, muß der Tank außerdem mit einem Belüftungsventil versehen sein, welches jedoch bei einer bestimmten, vorgegebenen Schräglage des Fahrzeuges, bzw. beim Überschlag desselben, automatisch schließen muß, um beispielsweise bei einem Unfall ein gefährliches Auslaufen von Kraftstoff weitgehend zu verhindern. Derartige Lüftungsventile werden im allgemeinen vom Tankhersteller vorgesehen, da man bisher keine Möglichkeit gesehen hat, diese ähnlich wie das Überdruckventil auch noch beispielsweise im Bereich der Absperrklappe unterzubringen. Es sind deshalb im allgemeinen beim Fahrzeughersteller zwei getrennte Montagevorgänge für das Belüftungsventil einerseits und für den Tankfüllstutzen andererseits erforderlich, was bei den großen Serien und kurzen Montagezeiten moderner Kraftfahrzeuge sich zu erheblichen Montagekosten aufsummiert.

Es ist die Aufgabe der vorliegenden Erfindung, einen Tankfüllstutzen der im Oberbegriff des Anspruches 1 genannten Art zu schaffen, welcher bei einfachem Aufbau und sicherer Funktion alle geltenden Betriebs- und Sicherheitsforderungen erfüllt und welcher über die Funktionen der bekannten Einrichtung hinaus weitere Funktionen übernehmen kann, so daß Montagevorgänge beim Tankeinbau eingespart werden können.

Diese Aufgabe ist erfindungsgemäß durch die im Kennzeichen des Anspruches 1 enthaltenen Merkmale gelöst.

Der erste abzweigende Kanal ist nicht mit einem Ausgleichsbehälter sondern mit einem im oberen Bereich des Treibstofftanks ausgebildeten Totraum verbunden. Da das Überfüllventil während des Tankens geschlossen ist, bildet sich dann, wenn der Füllstand den unteren Rand dieses Totraumes erreicht, eine Luft- bzw. Gasblase.

Wenn die Zapfpistole aus dem Tankfüllstutzen herausgezogen wird und die Verschlußklappe sich schließt, öffnet das Überfüllventil automatisch, so daß das im Totraum gefangene Gas entweichen und Treibstoff nachfließen kann, wodurch der Füllstand im Tankfüllrohr bis auf den vorgegebenen Betrag unter den Dichtsitz absinkt.

Das Überdruckventil ist nicht an der Verschlußklappe angeordnet, sondern einem zweiten hinter dem Dichtsitz mit dem Aufsatzstutzen verbundenen Kanal zugeordnet. Dadurch wird einerseits die Verschlußklappe baulich sehr vereinfacht, wobei insbesondere die Gefahr ausgeschlossen wird, daß das Überdruckventil durch die Zapfpistole beim Öffnen der Verschlußklappe beschädigt wird; andererseits kann das Überdruckventil unabhängig von den durch die Größe der Absperrklappe vorgegebenen Abmessungen für seine Aufgabe besser ausgelegt werden, so daß auch insoweit eine Verbesserung der Funktionssicherheit und -präzision erzielt werden kann.

Ferner wird in einem dritten, hinter dem Dichtsitz mit dem Aufsatzstutzen verbundenen Kanal ein Belüftungsventil angeordnet, welches bei Normallage des Fahrzeuges offen ist, bei einer bestimmten Schräglage bzw. beim Überschlag jedoch selbsttätig schließt. Dadurch, daß auch die normale Belüftungsfunktion dem Tankfüllstutzen zugeordnet ist, erübrigt sich die Montage eines gesonderten Belüftungsventils, so daß im wesentlichen alle für den Treibstofftank geforderten Funktionen in einem einzigen Montagearbeitsgang nämlich durch die Montage des des erfindungsgemäßen Tankfüllstutzens, installiert werden können.

Das Belüftungsventil ist für den normalen Motorbetrieb ausgelegt, während das Überdruckventil für den Fall vorgesehen ist, daß sich durch besondere Umstände ein Überdruck im Tank bildet, welcher zu einem Platzen des Tankes führen könnte. Um auch für den Fall Vorsorge zu treffen, daß sich im Tank ein gefährlicher Unterdruck bildet, ist gemäß einer Ausgestaltung der Erfindung dem zweiten Kanal zusätzlich ein bei Unterdruck im Treibstofftank selbsttätig öffnendes Unterdruckventil zugeordnet.

Gemäß einer weiteren Ausgestaltung der Erfindung ist vorgesehen, daß der zweite Kanal und der dritte Kanal von einer gemeinsamen, hinter dem Dichtsitz in den Aufsatzstutzen mündenden Anschlußleitung abzweigen. Diese Maßnahme ermöglicht einerseits eine kompakte Bauweise, andererseits ein Vormontieren des Überdruckventils, des Unterdruckventils und des Belüftungsventils zu einer einzigen Baugruppe, die wiederum in einem Arbeitsgang mit dem Tankfüllstutzen zusammengebaut werden kann.

Weitere Vorteile sowie Merkmale der Erfindung ergeben sich aus den Patentansprüchen, der Zeichnung sowie der Zeichnungsbeschreibung. In der Zeichnung sind mehrere Ausführungsbeispiele der Erfindung dargestellt, die im folgenden näher beschrieben werden. Es zeigen:
- Fig. 1: einen Längsschnitt durch einen Tankfüllstutzen mit einer inneren Verschlußklappe, einem Überfüllventil sowie weiteren Ventilen;
- Fig. 2: einen Teilschnitt entlang der Schnittlinie II-II des in Fig. 1 dargestellten Tankfüllstutzens;
- Fig. 3: einen Längsschnitt durch ein anderes Ausführungsbeispiel eines Tankfüllstutzens.

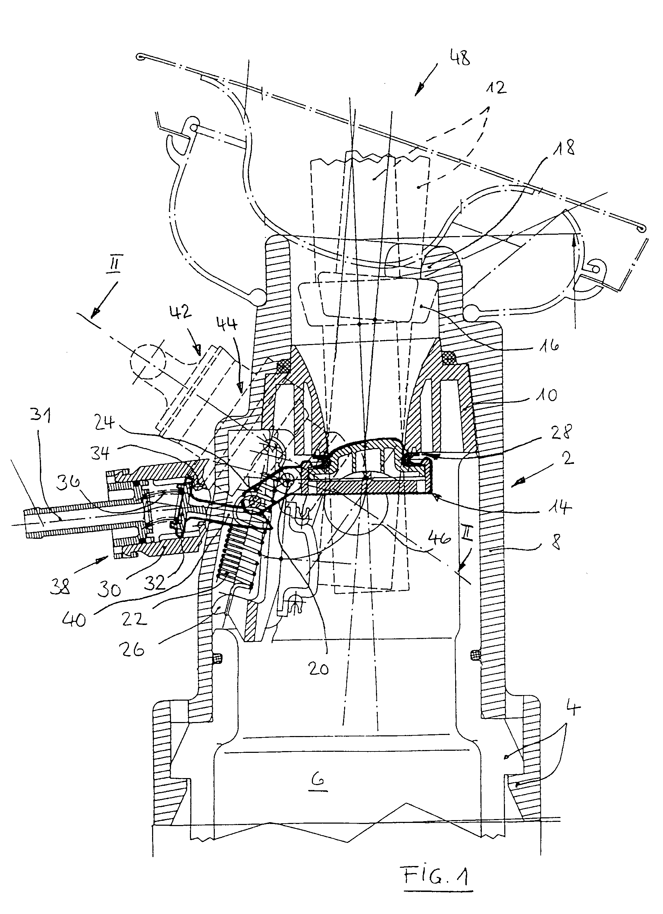

Der in Fig. 1 dargestellte Tankfüllstutzen 2 wird mittels einer Schnappverriegelung 4 auf das Ende eines Tankfüllrohres 6 aufgesetzt. Eine andere Befestigungsart, beispielsweise mittels Schweißen, ist möglich, wurde jedoch nicht dargestellt.

Der Tankfüllstutzen 2 besteht im wesentlichen aus einem Aufsatzstutzen 8, in welchem verschiedene, im folgenden näher beschriebene Funktionselemente integriert sind.

Im Bereich der äußeren Mündung des Aufsatzstutzens 8 ist ein Kragen 10 eingesetzt, welcher einerseits zur Führung der Zapfpistole 12 und andererseits als Dichtsitz für die im Aufsatzstutzen 8 angeordnete Verschlußklappe 14 dient. Wie Fig. 1 erkennen läßt, ist der Kragen 10 so ausgebildet, daß die Zapfpistole 12 im eingeführten Zustand eine Schwenkung um einen bestimmten Winkel ausführen kann, die ein Einführen der Zapfpistole sowie ein anschließendes Verhaken eines an der Zapfpistole ausgebildeten Haltewulstes hinter einem an der Mündung des Aufsatzstutzens 8 ausgebildeten Randvorsprung 18 erlaubt.

Die Verschlußklappe 14 ist um eine quer zur Längsachse des Aufsatzstutzens 8 stehende Schwenkachse 20 zwischen der mit starken Linien dargestellten Schließstellung und der mit schwachen Linien dargestellten Offenstellung verschwenkbar. In der Schließstellung liegt die Verschlußklappe 14 dichtend am unteren Mündungsrand des Kragens 10 an. Sie wird durch eine Zugfeder 22, die einerseits an einem an der Verschlußklappe 14 ausgebildeten Arm 24 und andererseits an einem im Aufsatzstutzen 8 angeordneten Befestigungshaken 26 eingehängt ist, in Anlage am unteren Mündungsrand des Kragens 10 gehalten. Die Zugfeder 22, die Hebellänge des Armes 24 usw. sind so ausgelegt, daß die Verschlußklappe 14 einerseits dicht am Dichtsitz anliegt, andererseits aber durch die Zapfpistole 12 aus der Schließstellung in die Offenstellung verstellt werden kann.

In Einfüllrichtung hinter dem Dichtsitz 28 zweigt vom Aufsatzstutzen 8 ein durch einen Rohransatz 30 gebildeter Kanal 31 ab, in welchem ein Tellerventil 32 angeordnet ist. Im Rohransatz 30 ist ein Ventilsitz 34 ausgebildet, auf welchem das Tellerventil 32 in seiner Schließstellung aufsitzt. Das Tellerventil 32 steht unter der Wirkung einer Druckfeder 36, die dieses Tellerventil in Richtung auf den Ventilsitz 34 vorspannt. Der Rohransatz 30, das Tellerventil 32 und der Ventilsitz 34 bilden das Überfüllventil 38.

Wie Fig. 1 erkennen läßt, hat das Tellerventil 32 einen zum Inneren des Aufsatzstutzens 8 stehenden Ventilschaft 40, welcher mit dem an der Verschlußklappe 14 angeordneten Arm 24 in Wirkverbindung steht. Bei der in Fig. 1 mit starken Linien gezeichneten Schließstellung der Verschlußklappe 14 wird der Ventilschaft 40 seitlich ausgelenkt, so daß der Ventilteller 32 vom Ventilsitz 34 abgehoben und das Ventil geöffnet wird. Bei der mit dünnen Linien gezeichneten Offenstellung der Verschlußklappe ist der Arm 24 außer Eingriff mit dem Ventilschaft 40, so daß dieses schließend auf dem Ventilsitz 34 aufsitzt und das Überfüllventil 38 geschlossen ist.

Der den vom Aufsatzstutzen 8 abzweigenden Kanal bildende Rohransatz 30 wird, wie nicht näher dargestellt ist, über eine Leitung mit einem im oberen Bereich des Treibstofftankes ausgebildeten Totraum verbunden, in welchem sich beim Füllen des Treibstofftankes eine Luft- bzw. Gasblase bildet, die in dem Totraum gefangen ist, solange das Überfüll-Ventil 38 beim Tanken geschlossen ist. Nach dem Tankvorgang wird die Zapfpistole aus dem Aufsatzstutzen 8 herausgezogen, wobei sich die Verschlußklappe 14 unter der Wirkung der Feder 22 schließt und mit dem Arm 24 das Überfüllventil 38 öffnet, so daß die im Totraum gefangene Gasblase entweichen und Treibstoff nachströmen kann; dadurch sinkt der Treibstoff im Aufsatzstutzen 8 bzw. im Füllrohr 6 bis auf einen Füllpegel ab, welcher deutlich unterhalb des Dichtsitzes 28 liegt.

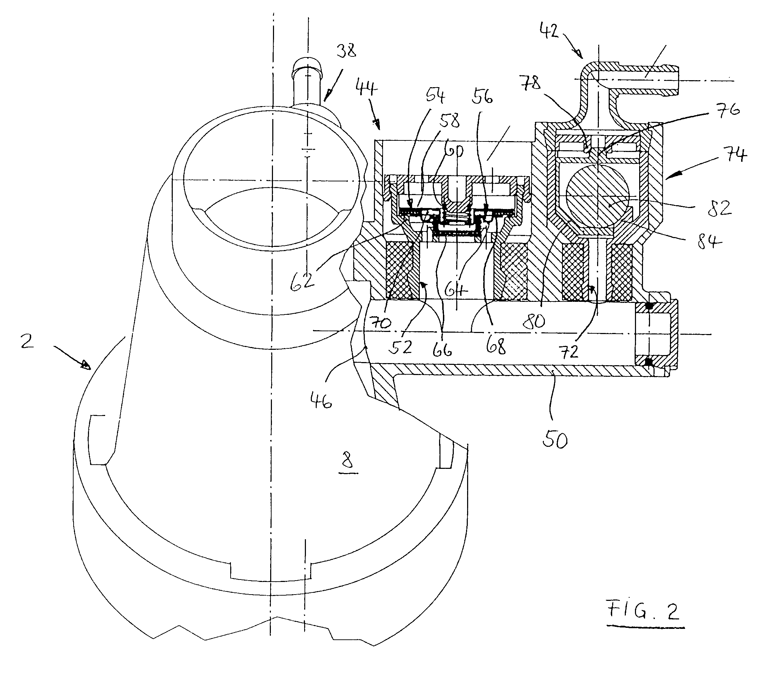

Wie Fig. 1 erkennen läßt, sind dem Aufsatzstutzen 8 weitere Ventilanordnungen 42 und 44 zugeordnet, die anhand der Fig. 2 näher beschrieben werden. Diese beiden Ventilanordnungen 42 und 44 steuern Kanäle, die mit dem Inneren des Aufsatzstutzens 8 ebenfalls in Füllrichtung hinter dem Dichtsitz 28 über eine Einmündung 46 verbunden sind.

Fig. 2 zeigt den Tankfüllstutzen 2 der Fig. 1 in einer Ansicht in Richtung des Pfeiles 48, wobei der Bereich der Ventilanordnungen 42, 44 entsprechend der Schnittlinie II-II geschnitten ist. In den Aufsatzstutzen 8 mündet über die Mündung 46 eine Anschlußleitung 50, deren freies, vom Aufsatzstutzen 8 fortweisendes Ende durch einen Stopfen verschlossen ist. Von der Anschlußleitung 50 zweigt ein Kanal 52 ab, in welchem ein Überdruckventil 54 sowie ein Unterdruckventil 56 angeordnet sind. Das Überdruckventil 54 und das Unterdruckventil 56 sind zu einem Gerät kombiniert. Das Überdruckventil 54 ist im wesentlichen als Tellerventil 58 ausgebildet, welches durch eine Feder 60 in Anlage an einem Ventilsitz 62 gehalten wird. Die Feder 60 ist so ausgelegt, daß das Tellerventil 58 bei einem bestimmten vorgegebenen Überdruck im Tank abhebt und einen Druckausgleich erlaubt.

Das Unterdruckventil 56 ist ebenfalls als Tellerventil 64 ausgebildet, welches durch eine Feder 66 in Anlage an einem Ventilsitz 68 gehalten wird, welcher durch den Rand einer im ersten Tellerventil 58 ausgebildeten zentrischen Öffnung 70 gebildet wird. Die Feder 66 ist so ausgelegt, daß bei einem bestimmten vorgegebenen Unterdruck im Tank das Tellerventil 64 abhebt und einen Druckausgleich zur Atmosphäre erlaubt.

Von der Anschlußleitung 50 zweigt ein weiterer Kanal 72 ab, in welchem ein als ganzes mit 74 bezeichnetes Belüftungsventil angeordnet ist. Dieses umfaßt einen Ventilkörper 76, welcher mit einem zentrischen Ventilsitz 78 zusammenwirkt. Im Normalfall, das heißt bei normaler Lage des Fahrzeuges, ist der Ventilkörper 76 vom Ventilsitz 78 abgehoben, so daß der Tank über die Anschlußleitung 50 ständig belüftet wird. Der Ventilkörper 76 ist mit einem Käfig 80 verbunden, in welchem eine als Kugel ausgebildete Betätigungsmasse 82 frei beweglich aufgenommen ist. Der Käfigboden weist nach oben auswärts verlaufende Auflagerampen 84 auf, auf denen die Kugel 82 aufliegt. Bei einer bestimmten Schräglage des Fahrzeuges rollt die Kugel 82 entlang den Auflagerampen und stößt an die Oberseite des Käfigs 80, wodurch der Ventilkörper 76 an den Ventilsitz 78 angelegt und das Ventil geschlossen wird. Dadurch wird gewährleistet, daß bei einer bestimmten Schräglage bzw. beim Überschlag des Fahrzeuges ein Auslaufen von Kraftstoff über das Belüftungsventil 74 vermieden wird. Das Belüftungsventil 74 ist über eine nicht dargestellte Anschlußleitung mit einem Aktivkohlefilter verbunden, welcher die umweltschädlichen Gasanteile bindet.

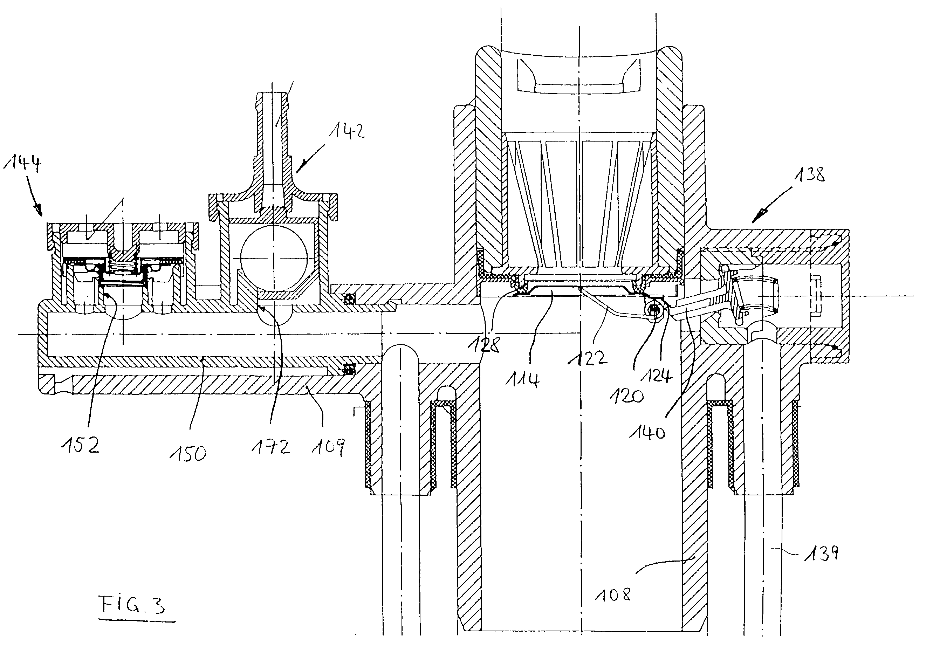

Fig. 3 zeigt eine Anordnung, die im Prinzip der in den Fig. 1 und 2 dargestellten Einrichtung entspricht. Die folgende Beschreibung bezieht sich deshalb nur auf einige wesentliche Unterschiede zu dem zuvor beschriebenen Ausführungsbeispiel.

Die Verschlußklappe 114 ist etwa tellerartig ausgebildet. Sie ist um eine quer zur Achse des Aufsatzstutzens 108 stehende Schwenkachse 120 schwenkbar im Inneren des Aufsatzstutzens 108 gelagert. Eine koaxial zur Schwenkachse 120 angeordnete Feder 122 drückt die Verschlußklappe 14 in ihre Schließstellung, bei der sie an einem Dichtsitz 128 anliegt. Ein von der Verschlußklappe 114 abstehender Armfortsatz 124 ist in der anhand der Fig. 1 beschriebenen Weise in Wirkverbindung mit dem Ventilschaft 140 des Überfüllventils 138, welches eine zu einem Totraum des Tanks führende Leitung 139 bei geschlossener Verschlußklappe 14 freigibt und bei geöffneter Verschlußklappe 114 absperrt, wie bereits beschrieben wurde. Eine ein kombiniertes Überdruck/Unterdruckventil bildende Ventilanordnung 144 sowie eine ein Belüftungsventil darstellende Ventilanordnung 142 sind in von einer Anschlußleitung 150 abzweigenden Kanälen 152 bzw. 172 angeordnet. Die Anschlußleitung 150 ist mit den Ventilanordnungen 142 und 144 zu einer vormontierten Baueinheit zusammengefaßt, die in ein am Aufsatzstutzen 108 einstückig ausgebildeten Träger 109 eingesetzt wird.

## Patentansprüche

1. Tankfüllstutzen für einen Treibstofftank, umfassend einen mit einem Trankfüllrohr verbindbaren Aufsatzstutzen mit einer innen angeordneten, zwischen einer an einem Dichtsitz anliegenden Schließstellung und einer vom Dichtsitz abgehobenen Offenstellung verstellbar gelagerten Verschlußklappe und mit einem in Füllrichtung hinter dem Dichtsitz vom Aufsatzstutzen abzweigenden Kanal, in welchem ein durch die verstellbare Verschlußklappe betätigbares Überfüll-Ventil angeordnet ist, welches beim Öffnen der Verschlußklappe geschlossen wird, sowie umfassend ein selbsttätig öffnendes Überdruckventil, dadurch **gekennzeichnet**,
- daß der abzweigende Kanal (31) mit einem im oberen Bereich des Treibstofftanks ausgebildeten Totraum verbunden ist,
- daß das Überdruckventil (54) einem zweiten hinter dem Dichtsitz (28) mit dem Aufsatzstutzen (8) verbundenen Kanal (52) zugeordnet ist,
- und daß in einem dritten hinter dem Dichtsitz (28) mit dem Aufsatzstutzen (8) verbundenen Kanal (72) ein bei Normallage des Fahrzeuges offenes, bei einer bestimmten Schräglage selbsttätig schließendes Belüftungsventil (74) angeordnet ist.

2. Tankfüllstutzen nach Anspruch 1, dadurch **gekennzeichnet**, daß dem zweiten Kanal (52) zusätzlich ein bei Unterdruck im Treibstofftank selbsttätig öffnendes Unterdruckventil (56) zugeordnet ist.

3. Tankfüllstutzen nach Anspruch 1 oder 2, dadurch **gekennzeichnet**, daß der zweite Kanal (52) und der dritte Kanal (72) von einer gemeinsamen, hinter dem Dichtsitz (28) in den Aufsatzstutzen (8) mündenden Anschlußleitung (50) abzweigen.

4. Tankfüllstutzen nach einem der Ansprüche 1 bis 3, dadurch **gekennzeichnet**, daß das Überfüllventil (38) als federbelastetes Tellerventil (32) mit einem zum Inneren des Aufsatzstutzens (8) stehenden Ventilschaft (40) ausgebildet ist, welcher mit einem an der Verschlußklappe (14) angeordneten Betätigungsarm (24) in Wirkverbindung steht.

5. Tankfüllstutzen nach Anspruch 4, dadurch **gekennzeichnet**, daß das Tellerventil (32) durch eine Feder (36) in seine Schließstellung verstellt wird und daß beim Schließen der Verschlußklappe (14) über den Betätigungsarm (24) der Ventilschaft (40) seitlich ausgelenkt und das Tellerventil (32) gegen die Kraft der Feder (36) einseitig von seinem Ventilsitz (34) abgehoben wird.

6. Tankfüllstutzen nach einem der Ansprüche 2 bis 5, dadurch **gekennzeichnet**, daß das Überdruckventil (54) und das Unterdruckventil (56) als konzentrisch angeordnete Tellerventile (58, 64) ausgebildet sind, wobei der im Durchmesser größere Überdruckventilteller (58) eine zentrische Öffnung (70) hat, die als Ventilsitz (68) für den im Durchmesser kleineren Unterdruckventilteller (64) dient.

7. Tankfüllstutzen nach einem der Ansprüche 1 bis 6, dadurch **gekennzeichnet**, daß das Belüftungsventil (74) als schwerkraftbetätigtes Ventil ausgebildet ist, wobei der Belüftungsventilkörper (76) mit einem Käfig (80) verbunden ist, in welchem eine Betätigungsmasse (82) frei beweglich angeordnet ist.

8. Tankfüllstutzen nach Anspruch 7, dadurch **gekennzeichnet**, daß der Käfig (80) am Käfigboden schräg nach oben auswärts verlaufende Auflagerampen (84) aufweist, auf denen eine als Betätigungsmasse (28) dienende Kugel frei aufliegt.

## Claims

1. A tank filling nipple for a fuel tank including a mounting nipple connectable with a tank filling pipe with a closure flap arranged inside of the mounting nipple for movement between a closed position at which it engages a sealing seat and an open position at which it is lifted from the sealing seat and with a duct branching from the mounting nipple behind the sealing seat in the filling direction, in which duct an overfill valve operable by the adjustable closure flap is arranged, which overfill valve is closed upon opening of the closure flap, and also including an automatically opening overpressure valve, characterized in that,
the branching off duct (31) is connected with a dead space formed in the upper region of the fuel tank,
that the overpressure valve (54) is associated with a second duct (52) connected with the mounting nipple (8) behind the sealing seat (28),
and that a ventilating valve (74) is arranged in a third duct (72) connected with the mounting nipple (8) behind the sealing seat (28) which ventilating valve is open in the normal position of the vehicle and which automatically closes at a given inclined position of the vehicle.

2. A tank filling nipple according to claim 1 further characterized in that the second duct (52) additionally has associated with it an underpressure valve (56) which automatically opens in response to an underpressure in the fuel tank.

3. A tank filling nipple according to claim 1 or 2 further characterized in that the second duct (52) and the third duct (72) branch from a common connecting manifold (50) opening into the mounting nipple (8) behind the sealing seat (28).

4. A tank filling nipple according to one of claims 1 to 3 further characterized in that the overfill valve (38) is formed as a spring loaded disc valve (32) with a valve stem (40) extending to the interior of the mounting nipple (8), which valve stem cooperates with an actuating arm (24) arranged on the closure flap (14).

5. A tank filling nipple according to claim 4 further characterized in that the disc valve (32) is adjusted to its closed position by a spring (36) and in that upon closing of the closure flap (14) the valve stem (40) is laterally displaced by the operating arm (24) and the disc valve (32) is lifted on one side from its valve seat (34) against the force of the spring (36).

6. A tank filling nipple according to one of claims 2 to 5 further characterized in that the overpressure valve (54) and the underpressure valve (56) are formed as concentrically arranged disc valves (58,64) with the overpressure valve disc (58) of larger diameter having a concentric opening (70) which serves as the valve seat (68) for the underpressure valve disc (64) of smaller diameter.

7. A tank filling nipple according to one of claims 1 to 6 further characterized in that the ventilating valve (74) is formed as a gravity operated valve with the ventilating valve body (76) being connected with a cage (80) in which an operating mass (82) is arranged for free movement.

8. A tank filling nipple according to claim 7 further characterized in that the cage (80) in its bottom has upwardly and outwardly extending support ramps (84) on which a ball serving as the operating mass (28) freely rests.

## Revendications

1. Tubulure de remplissage pour un réservoir de carburant, comprenant une tubulure rapportée qui peut être reliée à une conduite de remplissage de réservoir et qui est dotée d'un clapet d'obturation, disposé à l'intérieur de la tubulure et monté à déplacement entre une position fermée en application contre un siège d'étanchéité et une position ouverte décollée de ce siège d'étanchéité, et d'un canal qui bifurque après le siège d'étanchéité de la tubulure dans la direction de remplissage et dans lequel est disposée une soupape de trop-plein, qui peut être actionnée par le clapet d'obturation mobile et qui est fermée lors de l'ouverture de ce clapet d'obturation, et comprenant également une soupape de surpression à ouverture automatique, caractérisée
- en ce que le canal bifurquant (31) est relié à un espace mort agencé dans la région supérieure du réservoir de carburant,
- en ce que la soupape de surpression (54) est associée à un deuxième canal (52) relié à la tubulure rapportée (8) après le siège d'étanchéité (28),
- et en ce que, dans un troisième canal (72) également relié à la tubulure rapportée (8) après le siège d'étanchéité (28), est disposée une soupape d'aération (74) qui est ouverte dans la position normale du véhicule mais se ferme automatiquement à partir d'une position inclinée déterminée dudit véhicule.

2. Tubulure de remplissage selon la revendication 1, caractérisée en ce qu'une soupape de dépression (56), qui s'ouvre automatiquement en cas de dépression dans le réservoir de carburant, est en outre associée au deuxième canal (52).

3. Tubulure de remplissage selon la revendication 1 ou 2, caractérisée en ce que le deuxième canal (52) et le troisième canal (72) bifurquent d'une conduite de raccordement commune (50), débouchant après le siège d'étanchéité (28) dans la tubulure rapportée (8).

4. Tubulure de remplissage selon l'une quelconque des revendications 1 à 3, caractérisée en ce que la soupape de trop-plein (38) est réalisée sous la forme d'une soupape à disque (32) sollicitée par ressort et possédant une queue de soupape (40), dirigée vers l'intérieur de la tubulure rapportée (8) et fonctionnellement reliée à un bras d'actionnement (24) disposé sur le clapet d'obturation (14).

5. Tubulure de remplissage selon la revendication 4, caractérisée en ce que la soupape à disque (32) est sollicitée dans sa position de fermeture par un ressort (36) et en ce que, lors de la fermeture du clapet d'obturation (14), la queue de soupape (40) est déviée latéralement par l'intermédiaire du bras d'actionnement (24) et la soupape à disque (32) est par suite décollée d'un côté de son siège de soupape (34) contre la force dudit ressort (36).

6. Tubulure de remplissage selon l'une quelconque des revendications 2 à 5, caractérisée en ce que la soupape de surpression (54) et la soupape de dépression (56) sont réalisées sous la forme de soupapes à disque (58, 64) disposées concentriquement, le disque de soupape de surpression (58), de diamètre supérieur, possédant une ouverture centrale (70) qui sert de siège de soupape (68) pour le disque de soupape de dépression (64), de diamètre inférieur.

7. Tubulure de remplissage selon l'une quelconque des revendications 1 à 6, caractérisée en ce que la soupape d'aération (74) est réalisée sous forme d'une soupape actionnée par gravité, le corps de soupape d'aération (76) étant relié à une cage (80) dans laquelle une masse d'actionnement (82) est disposée à libre déplacement.

8. Tubulure de remplissage selon la revendication 7, caractérisée en ce que la cage (80) présente des rampes d'appui (84), qui s'étendent en oblique vers le haut et l'extérieur sur le fond de la cage et sur lesquelles repose librement une bille servant de masse d'actionnement (82).
